(19) Europäisches Patentamt

European Patent Office

Office européen des brevets

(11) **EP 1 213 713 B1**

(12) **EUROPEAN PATENT SPECIFICATION**

(45) Date of publication and mention
of the grant of the patent:
**26.07.2006 Bulletin 2006/30**

(51) Int Cl.:
**G11B 7/125** *(2006.01)*   **G11B 7/0045** *(2006.01)*

(21) Application number: **01126562.6**

(22) Date of filing: **15.11.2001**

(54) **Light intensity control and information recording apparatus and method and computer program product**

Lichtstärkeregeleinrichtung, Informationsaufzeichnungsgerät, Informationsaufzeichnungsverfahren und Computerprogrammprodukt

Dispositif de commande d'intensité lumineuse, appareil d'enregistrement d'informations, procédé d'enregistrement d'informations et produit de programme informatique

(84) Designated Contracting States:
**DE FR GB**

(30) Priority: **29.11.2000 JP 2000362713**

(43) Date of publication of application:
**12.06.2002 Bulletin 2002/24**

(73) Proprietor: **Ricoh Company, Ltd.**
**Tokyo 143-8555 (JP)**

(72) Inventor: **Suzuki, Haruyuki**
**Yokohama-shi,**
**Kanagawa-ken (JP)**

(74) Representative: **Schwabe - Sandmair - Marx**
**Stuntzstrasse 16**
**81677 München (DE)**

(56) References cited:
**EP-A- 1 033 705**       **US-A- 5 355 360**
**US-A- 5 636 197**

• **PATENT ABSTRACTS OF JAPAN vol. 1998, no. 02, 30 January 1998 (1998-01-30) -& JP 09 270128 A (TAIYO YUDEN CO LTD), 14 October 1997 (1997-10-14)**

**Description**

BACKGROUND OF THE INVENTION

Field of the Invention:

The present invention relates to an information recording apparatus such as an optical disc drive that records information in a recording medium such as a CD-R/RW disc, and in particular to a light intensity control apparatus that controls the power of light generated by a light source such as a semi-conductor laser.

Discussion of the Background:

Recently, use of an information recording apparatus capable of recording information in a recording medium such as a CD-R/RW disc has become wide spread. For example, an information recording apparatus proposed e.g. by Japanese Patent Application Publication No. 7-44885 has been well known. In this apparatus first, third and fourth levels of a light intensity (P1, P3 and P4) are set as optical output levels of a semiconductor laser. In addition, the remaining second intensity level (P2 = P1 + P4 - P3) can be set from the three lower optical intensity levels (P1, P3, and P4) as a peak value of a recording pulse light because the optical intensity value P3 is smaller than P1, and the following inequality are accordingly established:
P4 < P2, P3 < P4 < P2
As a result, a needless signal (i.e., signal higher than P2) can be avoided from being recorded in the recording medium, and accordingly, deterioration of the semiconductor laser can be avoided.
Further, when some information is recorded on an optical disc, an optical disc apparatus as an information recording apparatus generally modulates a recording laser beam at a higher recording power than when information is read.
Furthermore, when a writable optical disc such as CD-R (Compact Disc Recordable) disc having an organic colorant recording coating on a recording surface is utilized, the semiconductor laser light source alternately generates light beams having light power levels P1 (of a read intensity), and P2 (of a write intensity) higher than the P1. As a result, a pit is created on a portion of the recording surface when the laser light beam is irradiated with a light power level P2, and a space remains on another portion when the laser light beam is irradiated with a light power level P1 onto the recording surface. Further, a light power level P3 higher than the P2 level is generally utilized and the recording power wave form sometimes is formed as to include three different values having P1, P2, and P3 levels. That is, the P3 level is positioned at a pit top portion so as to make a pit edge sharp.
When a rewritable and phase changeable type recording medium such as CD-RW (Compact Disc Rewritable) disc is utilized, these three values are also utilized. Specifically, a portion of the recording surface irradiated by a laser beam generally is changed into an amorphous state (non-crystal) when the generated light power is varied at high speed between the power levels P3 and P1 repeatedly utilized. In contrast, a crystal portion is made when the P2 level is maintained. Thus, these portions can correspond to information data.
Thus, to control these several modulation intensity levels, a sampling circuit is generally utilized. Specifically, when the generated light intensity levels P1 and P2 for the CD-R use are utilized, the P2 level receives sampling and generally is compared with a prescribed reference value. Then, the laser current through the semiconductor laser light source is controlled based upon the comparison result.
Thus, the generated light power is controlled so that the generated light power P2 can be equal to the prescribed reference level (i.e., target level). In addition, since the P1 level corresponds to a reading power, the magnitude of laser current during reading generally is stored for later use.
However, in the above-described conventional information recording apparatus, since the modulation speed becomes extremely high along with increase in the recording speed, a time period of the P2 level correspondingly becomes extremely short. As a result, a high speed sampling circuit is required. However, it generally is difficult to provide such a high speed sampling circuit, or costly if provided. In addition, if an ordinary cheaper sampling circuit is utilized, the recording light power is not precise.
US 5,636,197 pertains to a feedback servo for beam power control, tracking control and focus control in an optical disk recording system. A beam power control apparatus comprises a beam generator for emitting a recording beam, a detector for detecting the light intensity of the recoding beam and generating the corresponding detection signal, a sample pulse generator to generate a sample pulse corresponding to the duration holding a lower and/or higher level in an information signal being recorded, sample-and-hold circuit for sample-and-holding the detection signal in response to the samplepulse, and feedback control system for controlling the light intensity of the recording beam taking a lower and/or higher level constant in accordance with the detection signal sample-and-held. The sample pulse generator stops the generation of the sample pulse if the duration of the lower and/or higher level of he information signal is shorter than a predetermined time length. The beam power control apparatus enables acceleration of the bit rate of the information signal independently on the improved response of the circuits and the elements such as the sampling circuit and the light power detecting system.

US 5,355,360 pertains to a semiconductor laser controlling apparatus. A laser beam controller of the semiconductor laser generator reads, writes and erases an information signal on a recording medium. A first power supply of a first current generates a laser beam to read the information signal. A second power supply of a second current generates a laser beam to write or erase the information signal. A controller circuit of the first and second power supply includes a first sampling circuit of a first value of the first current, a comparator of the first value with a predetermined reference value, a current adjusting circuit of the first current according to a result of the comparison of the first value with the predetermined first reference value, a second sampling circuit of a second value of the first current after the first current is adjusted by the current adjusting circuit, and a holding circuit of the second value of the first current so that the controller circuit controls the first power supply to supply the first current at the second value to the generator.

EP 1 033 705 A2 pertains to an optical disk device. This device controls the output power of a laser on recording a reproduction without expensive high-speed circuits. The optical disk device comprises a monitor portion for monitoring the power of laser lights, an average light quantity calculation portion for calculating the averaged light quantity of the power of the laser light, a memory portion for memorizing the averaged light quantity, an error quantity calculating portion for calculating the difference between the output signals of the averaged light quantity calculating portion and the memoryportion, and a laser power controlling portion for controlling the power of the laser light in response to the output signal from the error quantity calculating portion.

## SUMMARY OF THE INVENTION

Accordingly, an object of the present invention is to achieve a precise recording power.

The aforementioned object is solved by the subject matter of the claims 18, 19, 20, and 23, The dependent claims are directed to embodiments of advantage.

## ADVANTAGES OF THE INVENTION

Advantageously, a novel light intensity control apparatus is provided which includes a light source driving device that drives a light source by the first and second light intensity levels, a light intensity detection device that detects intensity of a light generated from the light source, a comparison device that compares the light intensity with the first and second reference levels, and a driving current adjustment device that adjusts the magnitude of a driving current that drives the light source in accordance with a result of the comparison.

Advantageously, the light intensity detection device includes a first signal generating device that generates a signal corresponding to the intensity of light generated at the second light power level when a modulation speed is relatively low, and a second signal generating device that generates a signal corresponding to an average of the intensity of the light when the modulation speed is relatively high.

Advantageously, a first selection device is provided so as to select one of the first and second signal generating devices based upon a selection instruction so as to select one of detection outputs.

Advantageously, the comparison device includes a reference level selection device (second selection device) that selects one of the first and the second reference levels in accordance with the selection instruction. Advantageously, the selection instruction indicates a digital modulation speed of the light source. Advantageously, the selection instruction controls the first selection device to select the first signal generating device, and the second selection device to select the first reference level, correspondingly, when the digital modulation speed is relatively low.

Advantageously, the selection instruction controls the first selection device to select the second signal generating device, and the second selection device to select the second reference level, correspondingly, when the digital modulation speed is relatively high. Advantageously, the light source driving device drives a light source by all of the first, second, and third light intensity levels.

In yet another embodiment, the driving current adjustment device adjusts magnitude of the driving current so that the light source generates a light having the second reference level based upon the comparison result when the light source is driven by the second light generation level.

Advantageously, the driving current adjustment device adjusts magnitude of the driving current in accordance with performance assumed or calculated from the first and second generated light levels when the light beam is generated at the third light intensity level.

## BRIEF DESCRIPTION OF DRAWINGS

A more complete appreciation of the present invention and many of the attendant advantages thereof will be readily obtained as the same becomes better understood by reference to the following detailed description of exemplary embodiments of the present invention when considered in connection with the accompanying drawings, wherein:

Fig. 1 is a schematic block diagram for illustrating a configuration of one embodiment of a laser power control circuit provided in an optical disc apparatus according to the present invention;
Fig. 2 is a chart for illustrating a variety of signal wave forms utilized when light generation control is performed for a CD-R by a laser power control circuit illustrated in Fig. 1;
Fig. 3 is also a chart for illustrating a variety of signal waves utilized when light generation control is performed for a CD-RW by a laser power control circuit illustrated in Fig. 1;
Fig. 4 is a schematic block diagram for illustrating an interior configuration of a driver illustrated in Fig. 1;
Fig. 5 is a chart for illustrating a table included in the driver for showing a relation between a control logic signal and an input signal; and
Fig. 6 is a graph for illustrating a relation between current of a laser diode (LD) illustrated in Fig. 1 and a recording power.

## DETAILED EMBODIMENT OF THE PREFERRED EMBODIMENTS

Exemplary embodiments of the present invention will now be described with reference to the drawings, wherein like reference numerals and marks designate identical or corresponding parts throughout several views.

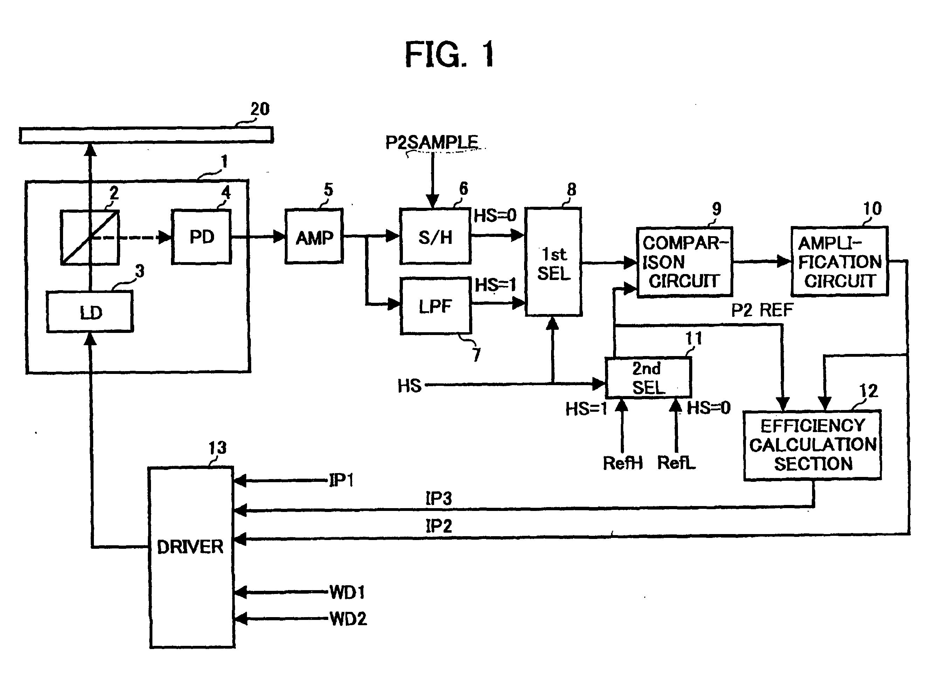

As shown in Fig. 1, an information recording apparatus may be provided so as to record and reproduce information by condensing a laser beam, that is generated by a semiconductor laser light source, on a recording coating formed on an optical disc 20 such as a CD-R/RW. A laser power control circuit may be provided so as to control the recording and reading power (i.e., the generated light power) of the semi-conductor laser light source when information is recorded and reproduced.

One example of a recording system and its operation performed by the laser power control circuit by utilizing two different light intensity levels will now be described. A pickup 1 may include a prism or beam splitter 2, a semi-conductor laser light source (LD) 3, and a photodetector (PD) 4 and so on. The LD 3 may irradiate a laser beam of a predetermined light power generated in correspondence with a driving current carried from the driver 13. The laser beam may then be imaged onto an optical disc 20 and is on the other hand irradiated to the PD 4 after reflection on a surface of the prism or beam splitter 2. When receiving the laser beam from the prism 2, the PD 4 may perform a photo-electronic conversion and output a signal in accordance with the power of the laser beam. Thus, functions of detecting and monitoring a value of generated light power of the laser beam may be achieved. The pickup 1 may also include an objective or lens system, and another optical detector capable of receiving a reflected light, or the like. It is to be understood that all sections of the pickup and all conventional sections not directly related to the present invention are neither described nor illustrated in the drawings herein.

An amplifier (Amp) 5 may amplify a generated light power monitoring signal indicating the magnitude of generated light power after the photo-electronic conversion by the PD 4. The generated light power monitoring signal may then be input to both a sample hold circuit (S/H) 6 and a low pass filter (LPF) 7 that is a low band filter device. The S/H 6 may sample the generated light power monitoring signal when a sampling pulse signal (P2sample) is generated, and hold data of a light intensity level thereof.

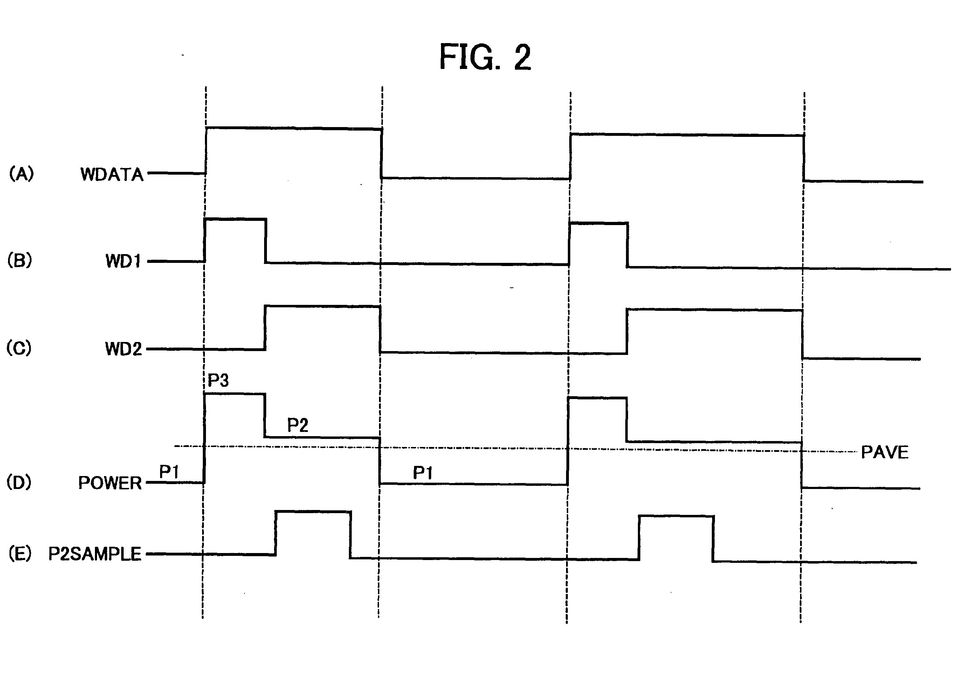

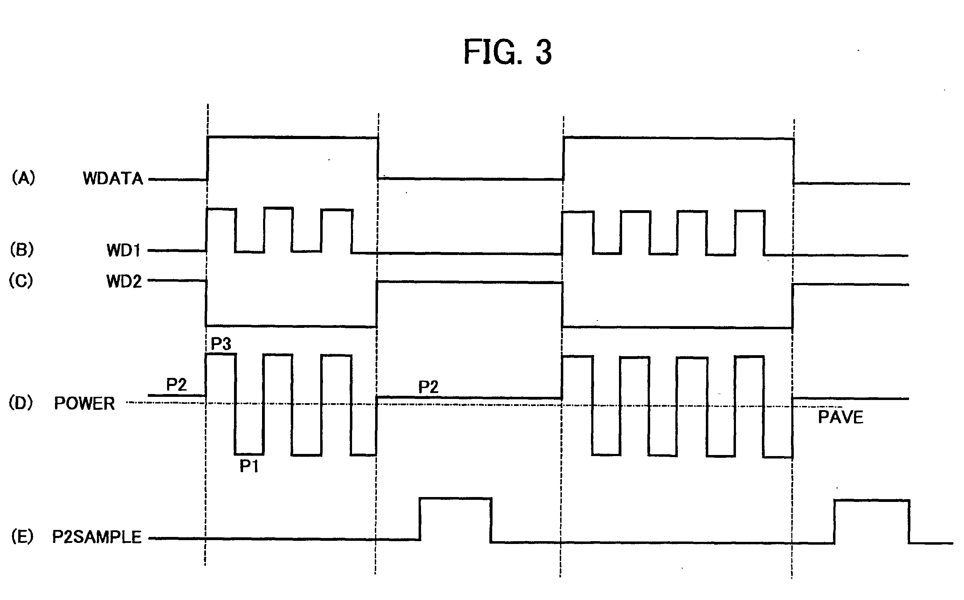

As illustrated in Fig. 2(d), when the CD-R disc is utilized, the sampling pulse signal (P2sample) may be generated and input to the S/H 6 at a time period when the generated light intensity corresponds to the second light intensity level P2, which is higher than the first light intensity level P1 that is the minimum light intensity level enabling the LD 3 to generate a light beam for reading. When the CD-RW is utilized (Fig. 3), the sampling pulse signal (P2sample) may preferably be generated at the second light power level P2 of the generated light power for erasing (it is called as a recording power level similar to the P2 level for the CD-R).

The second light intensity level P2 may be higher than the generated light level P1 for reproduction use. Thus, when a CD-RW disc is utilized and a high speed modulation is performed for modulating the light intensity between the third light intensity level P3 (which is higher than the second light intensity level P2) and the first light intensity level P1 as illustrated in Fig. 3,the recording coating may be changed into an amorphous state, and accordingly, a recording mark or a pit may be formed. The second light intensity level P2 changes the recording coating into the crystal line state. Thereby an erasing mark or a land may be formed in a manner known in the art.

When a CD-R disc is utilized, a recording mark or pit may be formed on a recording surface of an optical disc 20 by a light beam at the second light intensity level P2. A space or an unwritten area may be maintained on the recording surface if the first light intensity level P1 is used that is used for data reproduction. In addition, by positioning the third light intensity level P3 at a top of the light intensity level P2, in particular at the leading edge of the pulse of light intensity P2, as illustrated in Fig. 2(d), a front edge of the recording mark may be made sharp as noted in the art. Thus, the S/H 6 may in any case output a prescribed signal in accordance with the second light intensity level P2.

The LPF 7 may allow passage of a low band part of the generated light power monitoring signal. Thus, the LPF 7 may detect an average of the generated light power output from the PD 4. As illustrated in Fig. 2(d), when the CD-R disc is utilized, since an average (Pave) of the generated light power lies in the vicinity of the dotted line, an output of the LPF 7 may also be such a level. In contrast, as illustrated in Fig. 3 (d), when the CD-RW disc is utilized, such an output may be a level in accordance with the average (Pave).

Otherwise, the average (Pave) can be calculated from the third to first light intensity levels P3, P2, and P1, if an average duty cycle of a mark and space (i.e., an erase mark) is constant, and if the timings of generation of light power at the third to first light intensity levels P3, P2, and P1, (i.e., modulation timing) are known. For example, if each of the levels P3 and P2 is 10 mW, and the level P1 is 1 mW, and further an average duty cycle of 50% is used, the average during modulation can be obtained from the following formula:

$$\text{Pave} = (10 \times 0.5) + (1 \times 0.5) = 5.5 \text{ mW}$$

Thus, the above-described PD 4, Amp 5, S/H 6, LPF 7, and first selector (SEL) 8 may constitute the first selection device according to the present invention. The S/H 6 may serve as a first signal generating device for generating a signal corresponding to the first light intensity level. The LPF 7 may serve as a second signal generating device for generating a signal corresponding to the second light intensity level. In addition, the first selector 8 may serve as a first selection device.

The first SEL 8 may select any of the output signals from the S/H 6 and the LPF 7 depending on a selection instruction (i.e., selection of High Speed: HS). In particular, if a digital modulation speed of the LD 3, and accordingly, a speed of recording on the optical disc 20 is relatively low, the selection instruction HS may be zero (HS=0). Then, the first selector 8 may select and output an output signal from the S/H 6 to the comparison circuit 9.

In contrast, if the digital modulation speed, and accordingly, the recording speed is relatively high, the selection instruction HS may be one (HS=1). Then, the first selector 8 may select and output an output signal from the LPF 7 to the comparison circuit 9. Thus, when an operation is performed at high speed, instead of using the S/H 6, a monitoring signal that indicates an average power obtained by the LPF 7 may be utilized. Then, the comparison circuit 9 may compare a generated light power monitoring signal that is output from the first selector 8 with a reference level (P2Ref) that is output from a second selector 11. The comparison circuit 9 may then output a signal that indicates a comparison result. The reference level (P2Ref) may be a target level that the generated light power monitoring signal reaches so as to control the generated light power of the LD 3.

Thus, the comparison circuit 9 and the second selector 11 may constitute the comparison device according to the present invention. The second selector 11 may serve as the reference level selection device. In addition, the second selector 11 may select and output to the comparison circuit the first reference level Ref/L or the second reference level Ref/H as a reference level (P2/Ref) depending upon the selection instruction (HS). According to one embodiment, the reference levels Ref/L and Ref/H may be supplied by a conventional constant voltage supply unit or a D/A-converter connected e.g. to a microcomputer, as will become apparent to the person skilled in the art when studying this description.

Specifically, the second selector 11 may select and output to the comparison circuit 9 the first reference level Ref/L if the selection instruction HS indicates a low speed (i.e., HS=0). In contrast, the second SEL 11 may select and output to the comparison circuit 9 the second reference level Ref/H if the selection instruction HS indicates a high speed (i.e., HS=1).

Since the first reference level Ref/L is selected when the sample hold value of the second light intensity level P2 is selected as a generated light power monitoring signal, a prescribed level corresponding to the second light intensity level P2 may be set for the Ref/L. Since the second reference level Ref/H is selected when an average value is selected as a generated light power monitoring signal, a prescribed level corresponding to the average intensity level may be set for the Ref/H.

The amplification circuit 10 may amplify a comparison result indication signal that is output from the comparison circuit 9. A signal IP2 (described later in detail) may be output from the amplification circuit 10 and then input to the driver 13. The driver 13 may drive a driving current of magnitude proportional to the output signal IP2 through the LD 3 only when a recording pulse WD2 formed from write data (WDATA) and input thereto has a high level ("H"). Thus, the generated light power of the LD 3 can be adjusted. The driver 13 may drive a driving current of magnitude proportional to the level of the input signal IP1 through the LD 3 when the pulse WD2 has a low level ("L"). Thus, the generated light power of the LD 3 can be adjusted.

Accordingly, the driver 13 may serve as the light source driving device and driving current adjusting device according to the present invention.

Further, the above-noted selection instruction may control the first selection device to select the first signal generating device , and the second selection device to select the first light reference level (i.e., Ref/L) when a digital modulation speed of the light source is relatively low. Moreover, it may control the first selection device to select the second signal generating device, and the second selection device to select the second light reference level (i.e. Ref/H), when the digital modulation speed of the light source is relatively high.

In the above-described laser power control circuit, for a level of the input signal IP1, an appropriate laser current may preferably be stored during reproduction (i.e., the LD 3 is generating a light beam at the first light intensity level P1) and then given when recording is performed. A conventional control device not illustrated in the drawings may be provided so as to control the reproducing light power to be constant at the first light intensity level P1. For example, a generated light power monitoring signal of the first light intensity level P1 may be compared with the reference level and then amplified. The generated light power monitoring signal may then be applied to the driver 13 as an input signal IP1. Such an input signal IP1 may preferably be stored in an appropriate memory. For example, the input signal IP1 can be formed by digitalization by means of an A/D converter and stored in a latch circuit, and can then be returned as an analogous signal by means of the D/A converter using the known technique in the art.

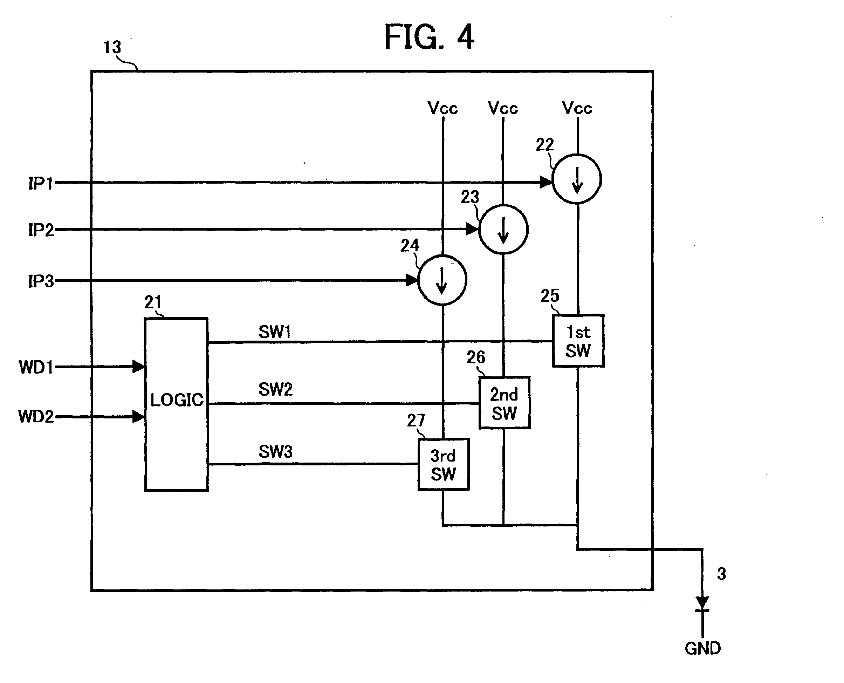

Another example of a recording control operation performed in this laser power control circuit using three different light intensity levels is now described. The interior configuration of the driver 13 of this example is illustrated in Fig. 4. Specifically, the first to third current sources 22, 23, and 24 may be provided to respectively generate a driving current of magnitude proportional to the level of each of the control-input signals IP1, IP2, and IP3. The first to third switches 25, 26 and 27 may be opened and closed by control logic signals SW1, SW2, and SW3 generated by the logic section 21 in accordance with combinations of input signals WD1 and WD2. The logic section 21 may be configured to switch over and carry a driving current to the LD 3 so that the LD 3 can generate a laser beam having a prescribed generated light power level corresponding to the first to third light intensity levels P1 to P3 based upon the input signals WD1 and WD2.

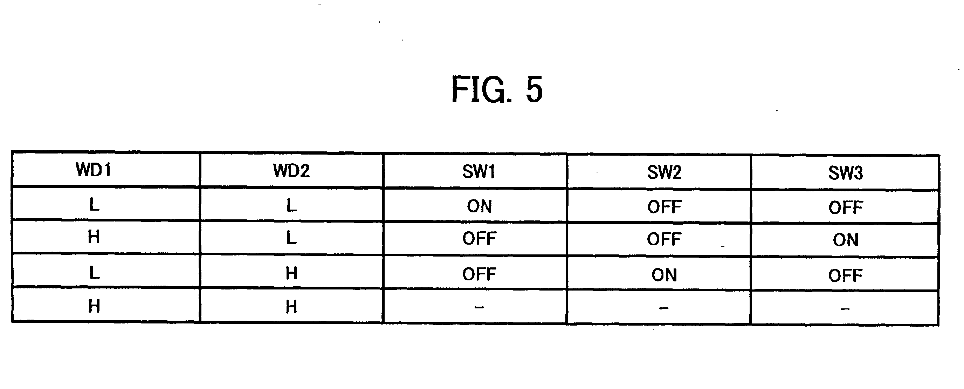

In Fig. 5, one example of a table showing relations between statuses of the control logic signals SW1 to SW3 and input signals WD1 and WD2 is illustrated. As noted therefrom, when both input signals WD1 and WD2 are in a low state (L), the control logic signal switch SW1 may be turned ON. Then, a driving current having a magnitude corresponding to the control input signal IP1 (i.e., the first light intensity level P1) may be carried to the LD 3. When the input signals WD1 and WD2 are in a high state (H) and in a low state (L), respectively, the control logic signal switch SW3 may be turned ON. Then, a driving current having a magnitude corresponding to the control input signal IP3 (i.e., the third light intensity level P3) may be carried to the LD 3. When the input signals WD1 and WD2 are in the states of L and H, respectively, the control logic signal switch SW2 may be turned ON. Then, a driving current having a magnitude corresponding to the control input signal IP2 (i.e., the second light intensity level P2) may be carried to the LD 3.

Even though the driver 13 carries the driving current corresponding to the first to third (i.e., three) light intensity levels P1 to P3 in the above-described embodiment, an operation using only the first and second light intensity levels P1 and P2 (i.e., two) may be sufficient if the recording performance of the recording coating can be satisfied. For example, two levels of the light intensity may be enough for a recording coating of a certain type of an organic colorant series used for example for a CD-R disc. (For the phase change recording coating such as a CD-RW disc, since three levels are generally required, the three levels of light intensity may be appropriate). When only the two levels are utilized, it is desirable that the input signal WD1 is maintained at a low level (L), and a signal substantially the same to the recording data WDATA is input for the input signal WD2.

Furthermore, even though the above-described embodiments exemplify a case wherein, when any one of the control logic signal switches SW1 to SW3 is turned ON, a driving current having a magnitude corresponding to any one of the first to third control input signals IP1 to IP3 is carried to the LD 3, the present invention is not limited to those and a current accumulation type described below may be employed instead. Specifically, for the first light intensity level P1 (corresponding to the control input signal IP1), the first control logic signal switch SW1 may be turned ON. For the second light intensity level P2 (corresponding to the sum of the control input signals IP1 and IP2), the first and second control logic signal switches SW1 and SW2 may simultaneously be turned ON. Further, for the third light intensity level P3 (corresponding to the sum of the control input signal IP1, IP2, and IP3), the first, second and third control logic signal switches SW1, SW2, and SW3 may simultaneously be turned ON.

Such a current accumulation type may readily be realized, if its logic formed from combinations of timings of the input signals WD1 and WD2 is changed in a design in accordance with power level generation timings as appropriate.

One example of a desirable operation using light powers with two different level (i.e., the first and second light intensity levels P1 and P2) is now described. Initially, the driver 13 may hold a level corresponding to a driving current carried when the LD 3 is controlled at a reproduction power as a control-input signal IP1. Then, the selection instruction HS may be zero (HS=0) when the recording speed is relatively low. Otherwise, the selection instruction HS may be one (HS=1) when the recording speed is relatively high. In addition, the input signal WD1 may be maintained at a low level (L) for the reason noted earlier. Furthermore, a signal substantially the same as the recording data pulse WDATA may be input to the driver 13 as an input signal WD2.

Then, as described above, a sample value of the second light intensity level P2 or an average value may be selected by the selection instruction HS as a generated light power monitoring signal. Simultaneously, the reference level (P2Ref) may be selected correspondingly as a target power level. Thus, the second light intensity level P2 of the LD 3 can be controlled at around a prescribed target level all of when a recording speed is high and low without employing a high speed sampling circuit.

Another example of a generated light power control operation performed by the third light intensity level P3 is now described. The third light intensity level P3 may be calculated using the laser performance (ratio of laser power to current). Such a laser performance may be calculated from a level corresponding to the magnitude of the driving current for generating the second light intensity level P2. One example of methods for calculating the laser performance in the performance calculation section 12 is now described. It is initially assumed that the driver 13 is of the current switching type as illustrated in Fig. 4. The laser performance can be calculated from a control input signal IP2 required when the LD 3 generates a light beam having the second light intensity level P2, and a control input signal IP1 required when the LD 3 generates a light beam having the first light intensity level P1, by employing the following formula:

$$\text{Performance} = (P2 - P1) / (IP2 - IP1)$$

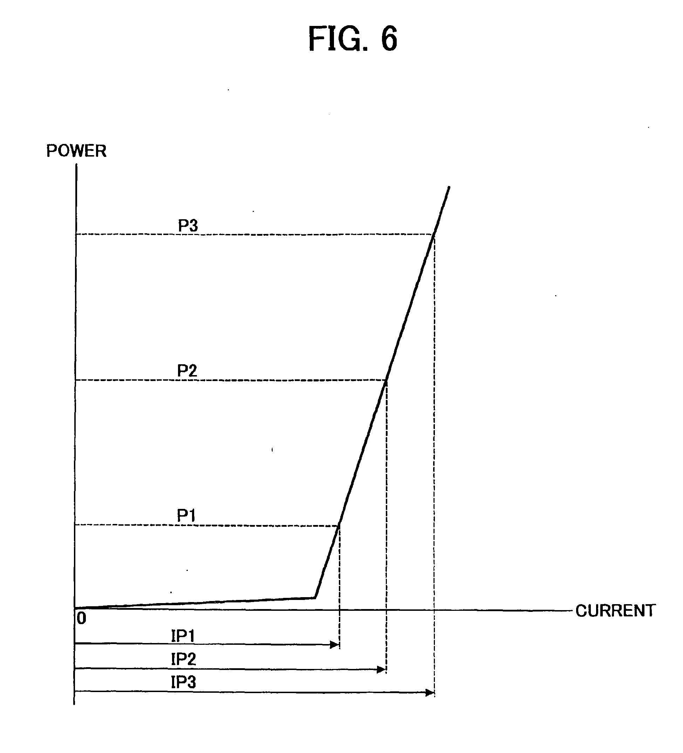

As illustrated in Fig. 6, the laser performance may be represented by the inclination of a straight line. Thus, a control-input signal IP3 required for the LD 3 to generate a light beam having the third light intensity level P3 may be obtained from the following formula:

$$IP3 = IP1 + (P3 - P1) / \text{Performance}$$

As for the control input signal IP2 required for the LD 3 during generation of a light beam at the second light intensity level P2, it is desirable to set the selection instruction to zero (HS=0) and to utilize a control input signal IP2 as utilized when the second light intensity level P2 is controlled by sampling. If the laser performance value is once obtained, since a control input signal IP3 corresponding to an optional third light intensity level P3 can be calculated, no problem occurs even when the selection instruction HS is set to one.

In the above-described laser power control circuit of Fig. 1, the voltage of the reference level (P2Ref) is used as the second light intensity level P2 when the performance calculation section 12 calculates the performance. However, another level does not raise any problem if it simply corresponds to the second light intensity level P2. Specifically, it is sufficient to convert only the scale between the laser performance and the third light intensity level IP3 when calculation is performed. Namely, it is sufficient to perform this calculation by converting the first and third light intensity levels P1 and P3 into substantially the same unit as the reference level (P2Ref).

Furthermore, the laser power control circuit of the above-described embodiment can be applied to another system as a device capable of adjusting a driving current and controlling the generated light power of a light source.

Furthermore, even though the driving current is adjusted by two or three values of light intensity levels, the present invention is not limited thereto. Specifically, the drive current may be adjusted by four or more different light intensity levels in the similar manner.

According to these embodiments, since the driving current of the light source is adjusted by switching a sampling monitoring signal to and from an averaged monitoring signal depending on the recording speed, a high-speed modulation may be performed without using a high speed sampling circuit. In addition, a light source control to generate a light beam having a prescribed power (i.e., recording intensity) can be precisely performed both in low speed and high-speed recording. Furthermore, since the generated light power is adjusted by means of three light intensity levels, the present invention can be applied to a variety of optical instruments or the like as a generated light power control apparatus.

The mechanisms and processes set forth in the present invention may be implemented using one or more conventional general purpose microprocessors and/or signal processors programmed according to the teachings in the present specification as will be appreciated by those skilled in the relevant arts. Appropriate software coding can readily be prepared by skilled programmers based on the teachings of the present disclosure, as will also be apparent to those skilled in the relevant arts. However, as will be readily apparent to those skilled in the art, the present invention also may be implemented by the preparation of application-specific integrated circuits by interconnecting an appropriate network of conventional component circuits or by a combination thereof with one or more conventional general purpose microprocessors and/or signal processors programmed accordingly. The present invention thus also includes a computer program product which may be recorded on a data recording medium and may include, but is not limited to, any type of disk including floppy disks, optical disks, CD-ROMs, magnet-optical disks, ROMs, RAMs, EPROMs, EEPROMs, flash memory, magnetic or optical cards, or any type of media suitable for storing electronic instructions.

Numerous additional modifications and variations of the present invention are possible in light of the above teachings. It is therefore to be understood that within the scope of the appended claims, the present invention may be practiced otherwise than as specifically described herein.

**Claims**

1. A light intensity control apparatus, comprising:

   a light source driving device (13) configured to drive a light source (3) to generate light of a first light intensity level (P1) and at least of a second light intensity level (P2) higher than said first light intensity level;
   a first signal generating device (6) for generating a signal corresponding to the second light intensity level (P2) wherein the second light intensity level is detected by a sampling operation; and **characterized by**
   a second signal generating device (7) for generating a signal corresponding to an average light intensity ;
   a first selection device (8) configured to select the signal generated by one of the first and second signal generating devices (6, 7) in accordance with a selection instruction (HS) which varies depending on a light modulation speed of the light source (3);
   a comparison device (9) configured to compare the selected signal with a reference signal; and
   a driving current adjustment device (31) for adjusting a driving current through the light source (3) in accordance with the comparison result.

2. The light intensity control apparatus according to claim 1 further comprising
   a reference providing device for providing a first and second reference signal; and
   a reference selecting device (11) configured to select one of the reference signals in accordance with the selection instruction (HS) and to apply a selected reference signal to said comparison device.

3. The light intensity control apparatus according to claim 1 or 2, wherein said light source driving device (13) is additionally configured to drive said light source (3) to generate light of a third light intensity level higher than said first and second light intensity levels.

4. The light intensity control apparatus according to claim 3, wherein said third light intensity level is generated by calculating a performance of the light source referring to the first and second generated light levels.

5. The light intensity control apparatus according to any one of the preceding claims, wherein said apparatus is constituted to reads and/or writes information from and/or onto a recording medium by means of the light of the light source (3).

6. The light intensity control apparatus according to claim 5, wherein the apparatus is constituted to read information from the recording medium during a reproduction mode by using light of said first light intensity level.

7. The light intensity control apparatus according to claim 5, wherein-the apparatus is constituted to form a space or land on a recording surface of the recording medium during a recording mode by using light of said first light intensity level.

8. The light intensity control apparatus according to any of claims 5 to 7, wherein the apparatus is constituted to form a pit or an amorphous portion on a recording surface of the recording medium during a recording mode by using light of said second light intensity level.

9. The light intensity control apparatus according to any one of the preceding claims, wherein a reading light intensity is detected and stored during a reproduction mode as said first light intensity level for a recording mode.

10. The light intensity control apparatus according to any of the preceding claims, wherein said signal corresponding to the average light intensity is detected using a low pass filter (7).

11. The light intensity control apparatus according to any of claims 1 to 9, wherein said signal corresponding to the average light intensity is calculated from the light intensity levels when an average duty cycle of a mark and space is constant and a modulation timing of the light intensity levels are known.

12. The light intensity control apparatus according to any one of claims 2 to 11, wherein said first reference signal is a prescribed value which is selected when the signal corresponding to the second light intensity level (P2) is selected by the first selection device.

13. The light intensity control apparatus according to any of claims 2 to 12, wherein said second reference signal is a prescribed value which is selected when the signal corresponding to the average light intensity is selected by the first selection device.

14. The light intensity control apparatus according to claims 12 and 13, wherein said first reference signal is compared with the output signal of the first signal generating device (6), and said second reference signal is compared with the average value.

15. The light intensity control apparatus according to any of the preceding claims, wherein the apparatus is constituted such that said selection instruction (HS) controls the first selection device (8) and the second selection device (11) to select the output signal of the first signal generating device (6) and the first reference signal, respectively, when the digital modulation speed is relatively low.

16. The light intensity control apparatus according to any one of claims 1 to 15, wherein the apparatus is constituted such that said selection instruction (HS) controls the first selection device (8) and the second selection device (11) to select the output signal of the second signal generating device and the second reference signal, respectively, when the digital modulation speed is relatively high.

17. An information recording system configured to record information onto a recording medium, comprising:

   a light source (3) for irradiating a light beam from said light source onto said recording medium, and
   a light intensity control apparatus for controlling the light intensity of said light beam,

   wherein said light intensity control apparatus is configured in accordance with any of the preceding claims.

18. A computer comprising the information recording system according to claim 17.

19. A method for controlling light intensity, comprising the steps of:

   driving a light source (3) so as to generate light of a first light intensity level (P1) and at least of a second light intensity level (P2) higher than said first light intensity level;

   **characterized by** selectively generating a first signal corresponding to the second light intensity level wherein said second light intensity level is detected by a sampling operation and a second signal corresponding to an average of the intensity of the light generated from the light source depending upon a light modulation speed of the light source; comparing a first and second target level with the first and second signal, respectively; and adjusting a magnitude of a driving current for driving the light source (3) in accordance with the comparison result.

20. The method according to claim 19, wherein said light source (3) optionally is driven to generate light of a third light intensity level higher than said first and second light intensity levels.

21. The method according to claim 19 or claim 20, wherein said first and second target level (Ref/H, Ref/L) is selected in accordance with the light modulation speed.

22. Computer program product comprising program code means for performing the steps according to any of claims 19 to 21, if said program is run on a data processing means of a light control apparatus or of an information recording system comprising a light intensity control apparatus according to any of claims 1 to 16.

23. Computer program product comprising program code means according to claim 22, that are recorded on a computer readable data carrier or in a data storage component whose memory is loadable into the data processing means.

**Patentansprüche**

1. Lichtstärkesteuereinrichtung, welche folgendes umfasst:

eine Lichtquellenantriebs- bzw. ansteuerungsvorrichtung (13), so konfiguriert, um eine Lichtquelle (3) anzusteuern bzw. anzutreiben, um Licht eines ersten Lichtstärkepegels (P1) und wenigstens eines zweiten Lichtstärkepegels (P2) zu erzeugen, welcher höher ist als der erste Lichtstärkepegel;

eine erste Signalerzeugungsvorrichtung (6), um ein Signal entsprechend des zweiten Lichtstärkepegels (P2) zu erzeugen, wobei der zweite Lichtstärkepegel durch eine Abtastoperation detektiert wird, und **gekennzeichnet durch**

eine zweite Signalerzeugungsvorrichtung (7), um ein Signal entsprechend einer mittleren Lichtstärke zu erzeugen;

eine erste Auswahlvorrichtung (8), so konfiguriert, um das Signal auszuwählen, welches **durch** eine der ersten und zweiten Signalerzeugungsvorrichtungen (6, 7) erzeugt wurde, und zwar gemäß einer Auswahlanweisung (HS), welche abhängig von einer Lichtmodulationsgeschwindigkeit der Lichtquelle (3) variiert;

eine Vergleichsvorrichtung (9), so konfiguriert, um das ausgewählte Signal, mit einem Referenzsignal zu vergleichen; und

eine antreibende bzw. ansteuernde, Strom-Einstellvorrichtung (31), um einen Antriebsstrom **durch** die Lichtquelle (3) entsprechend des Vergleichsresultats anzutreiben bzw. anzusteuern.

2. Lichtstärkesteuereinrichtung gemäß Anspruch 1, welcher weiter folgendes umfasst:

eine Referenz-Bereitstellungsvorrichtung, um ein erstes und zweites Referenzsignal bereitzustellen; und eine Referenz-Auswahlvorrichtung (11), so konfiguriert, um eines der Referenzsignale entsprechend der Auswahlanweisung (HS) auszuwählen, und ein ausgewähltes Referenzsignal auf die Vergleichsvorrichtung anzuwenden.

3. Lichtstärkesteuereinrichtung gemäß Anspruch 1 oder 2, wobei die Lichtquellenantriebs- bzw. ansteuerungsvorrichtung (13) außerdem so konfiguriert, um die Lichtquelle (3) anzutreiben bzw. anzusteuern, um Licht eines dritten Lichtstärkepegels zu erzeugen, welcher höher ist, als die der ersten und zweiten Lichtstärkepegel.

4. Lichtstärkesteuereinrichtung gemäß Anspruch 3, bei welcher der dritte Lichtstärkepegel **dadurch** erzeugt wird, indem eine Leistungsfähigkeit der Lichtquelle hinsichtlich des ersten und zweiten erzeugten Lichtlevel berechnet wird.

5. Lichtstärkesteuereinrichtung gemäß irgendeinem der vorangegangenen Ansprüche, bei welcher die Einrichtung ausgebildet ist, Informationen mittels des Lichts der Lichtquelle (3) von und/oder auf das Aufzeichnungsmedium zu lesen und/oder zu schreiben.

6. Lichtstärkesteuereinrichtung gemäß Anspruch 5, bei welcher die Einrichtung eingesetzt wird, um Informationen von dem Aufzeichnungsmedium während eines Wiedergabemodus zu lesen, indem Licht des ersten Lichtstärkepegels verwendet wird.

7. Lichtstärkesteuereinrichtung gemäß Anspruch 5, bei welcher die Einrichtung eingesetzt wird, um einen Zwischenraum bzw. Space oder ein Land bzw. Furche während eines Aufzeichnungsmodus auf einer Aufzeichnungsoberfläche des Aufzeichnungsmediums auszubilden, indem Licht des ersten Lichtstärkepegels verwendet wird.

8. Lichtstärkesteuereinrichtung gemäß irgendeinem der Ansprüche 5 bis 7, bei welcher die Einrichtung eingesetzt wird, um eine Vertiefung bzw. einen Pit oder einen amorphen Abschnitt auf einer Aufzeichnungsoberfläche eines Aufzeichnungsmediums während eines Aufzeichnungsmodus auszubilden, indem Licht des zweiten Lichtstärkepegels verwendet wird.

9. Lichtstärkesteuereinrichtung gemäß irgendeiner der vorangegangenen Ansprüche, bei welcher eine Leselichtstärke ermittelt und während eines Wiedergabemodus gespeichert wird, wie der erste Lichtstärkepegel für einen Aufzeichnungsmodus.

10. Lichtstärkesteuereinrichtung gemäß irgendeinem der vorangegangenen Ansprüche, bei welcher das Signal, welches der mittleren Lichtstärke entspricht, ermittelt wird, indem ein Tiefpassfilter (7) verwendet wird.

11. Lichtstärkesteuereinrichtung gemäß irgendeines der Ansprüche 1 bis 9, bei welcher das Signal, welches der mittleren Lichtstärke entspricht, aus den Lichtstärkepegeln berechnet wird, wenn ein mittlerer Tastgrad einer Markierung und eines Zwischenraums konstant ist und Modulationszeitabläufe der Lichtstärkepegel bekannt sind.

12. Lichtstärkesteuereinrichtung gemäß irgendeinem der Ansprüche 2 bis 11, bei welcher das erste Referenzsignal einen vorgeschriebenen Wert aufweist, welcher gewählt wird, wenn das Signal, welches dem zweiten Lichtstärkepegel (P2) entspricht, von der ersten Auswahlvorrichtung ausgewählt wird.

13. Lichtstärkesteuereinrichtung gemäß irgendeinem der Ansprüche 2 bis 12, bei welcher das zweite Referenzsignal einen vorgeschriebenen Wert aufweist, welcher gewählt wird, wenn das Signal, welches der mittleren Lichtstärke entspricht, von der ersten Auswahlvorrichtung ausgewählt wird.

14. Lichtstärkesteuereinrichtung gemäß der Ansprüche 12 und 13, bei welcher das erste Referenzsignal mit dem Ausgangssignal der ersten Signalerzeugungsvorrichtung (6) verglichen wird und das zweite Referenzsignal mit dem Mittelwert verglichen wird.

15. Lichtstärkesteuereinrichtung gemäß irgendeinem der vorangegangenen Ansprüche, bei welcher die Einrichtung so ausgebildet ist, dass die Auswahlanweisung (HS) die erste Auswahlvorrichtung (8) und die zweite Auswahlvorrichtung (11) steuert, um jeweils das Ausgangssignal der ersten Signalerzeugungsvorrichtung (6) und das erste Referenzsignal auszuwählen, wenn die digitale Modulationsgeschwindigkeit relativ niedrig ist.

16. Lichtstärkesteuereinrichtung gemäß irgendeinem der Ansprüche 1 bis 15, bei welcher der Apparat so ausgebildet ist, dass die Auswahlanweisung (HS) die erste Auswahlvorrichtung (8) und die zweite Auswahlvorrichtung (11) steuert, um jeweils das Ausgangssignal der zweiten Signalerzeugungsvorrichtung und das zweite Referenzsignal auszuwählen, wenn die digitale Modulationsgeschwindigkeit relativ hoch ist.

17. Informationsaufzeichnungsgerät, konfiguriert um Informationen auf ein Aufzeichnungsmedium aufzuzeichnen, welches folgendes umfasst:

    eine Lichtquelle (3), um einen Lichtstrahl von der Lichtquelle auf das Aufzeichnungsmedium auszustrahlen, und eine Lichtstärkesteuereinrichtung, um die Lichtstärke des Lichtstrahls zu steuern bzw.

    zu regeln, bei welcher die Lichtstärkesteuereinrichtung entsprechend irgendeinem der vorangegangenen Ansprüche konfiguriert ist.

18. Computer, welcher das Informationsaufzeichnungssystem gemäß Anspruch 17 umfasst.

19. Verfahren zur Steuerung der Lichtstärke, welches folgende Schritte umfasst:

    Antreiben bzw. Ansteuern einer Lichtquelle (3), um Licht für einen ersten Lichtstärkepegel (P1) und wenigstens einen zweiten Lichtstärkepegel (P2) zu erzeugen, welcher höher ist als der erste Lichtstärkepegel;

    **gekennzeichnet durch** ein selektives Erzeugen eines ersten Signals entsprechend des zweiten Lichtstärkepegels, wobei der zweite Lichtstärkepegel **durch** eine Abtastoperation detektiert wird, und ein zweites Signal, welches einem Durchschnittswert der Lichtstärke entspricht, welche von der Lichtquelle, abhängig von einer Lichtmodulationsgeschwindigkeit der Lichtquelle, erzeugt wird;
    Vergleichen eines ersten und zweiten Ziel- bzw. Soll-Pegels mit jeweils dem ersten und zweiten Signal; und
    Einstellen einer Stärke eines Antriebsstroms zum Antreiben bzw. Ansteuern der Lichtquelle (3) entsprechend dem Vergleichsresultat.

20. Verfahren gemäß Anspruch 19, bei welchem die Lichtquelle (3) optional angetrieben bzw. angesteuert wird, um Licht eines dritten Lichtstärkepegels zu erzeugen, welcher höher ist, als die ersten und zweiten Lichtstärkepegel.

21. Verfahren gemäß Anspruch 19 oder 20, bei welchem der erste und zweite Ziel- bzw. Soll-Pegel (Ref/H, Ref/L) entsprechend der Lichtmodulationsgeschwindigkeit gewählt wird.

22. Computerprogrammprodukt, welches Programmcodemittel umfasst, um die Schritte gemäß irgendeinem der Ansprüche 19 bis 21 auszuführen, wenn das Programm auf einem Datenverarbeitungsmittel einer Lichtsteuerungseinrichtung, oder von einem Informationsaufzeichnungssystems betrieben wird, welche bzw. welches eine Lichtstärkesteuereinrichtung gemäß irgendeinem der Ansprüche 1 bis 16 umfasst.

23. Computerprogrammprodukt, welches Programmcodemittel gemäß Anspruch 22 umfasst, welche auf einem computerlesbaren Datenträger oder in einer Datenspeicherkomponente aufgezeichnet sind, dessen bzw. deren Speicher in das Datenverarbeitungsmittel ladbar ist.

**Revendications**

1. Dispositif de commande d'intensité de lumière, comprenant :

   un dispositif d'entraînement de source de lumière (13) configuré pour entraîner une source de lumière (3) pour générer une lumière d'un premier niveau d'intensité de lumière (P1) et au moins d'un deuxième niveau d'intensité de lumière (P2) supérieure au dit premier niveau d'intensité de lumière ;
   un premier dispositif de génération de signal (6) destiné à générer un signal correspondant au deuxième niveau d'intensité de lumière (P2) dans lequel le deuxième niveau d'intensité de lumière est détecté par une opération d'échantillonnage ; et **caractérisé par**
   un deuxième dispositif de génération de signal (7) destiné à générer un signal correspondant à une intensité de lumière moyenne ;
   un premier dispositif de sélection (8) configuré pour sélectionner le signal généré par un des premier et deuxième dispositifs de génération de signal (6, 7) selon une instruction de sélection (HS) qui varie selon une vitesse de modulation de lumière de la source de lumière (3) ;
   un dispositif de comparaison (9) configuré pour comparer le signal sélectionné avec un signal de référence ; et
   un dispositif d'ajustement de courant d'entraînement (31) destiné à ajuster un courant d'entraînement à travers la source de lumière (3) selon le résultat de comparaison.

2. Dispositif de commande d'intensité de lumière selon la revendication 1 comprenant en outre
   un dispositif de fourniture de référence destiné à fournir un premier et un deuxième signaux de référence ; et
   un dispositif de sélection de référence (11) configuré pour sélectionner un des signaux de référence selon l'instruction de sélection (HS) et pour appliquer un signal de référence sélectionné sur ledit dispositif de comparaison.

3. Dispositif de commande d'intensité de lumière selon la revendication 1 ou 2, dans lequel ledit dispositif d'entraînement de source de lumière (13) est configuré de façon additionnelle pour entraîner ladite source de lumière (3) pour générer une lumière d'un troisième niveau d'intensité de lumière supérieur aux dits premier et deuxième niveaux d'intensité de lumière.

4. Dispositif de commande d'intensité de lumière selon la revendication 3, dans lequel ledit troisième niveau d'intensité de lumière est généré en calculant une performance de la source de lumière se-rapportant aux premier et deuxième niveaux de lumière générés.

5. Dispositif de commande d'intensité de lumière selon l'une quelconque des revendications précédentes, dans lequel ledit dispositif est constitué pour lire et/ou écrire des informations en provenance de et/ou sur un support d'enregistrement au moyen de la lumière de la source de lumière (3).

6. Dispositif de commande d'intensité de lumière selon la revendication 5, dans lequel 1e dispositif est constitué pour lire des informations en provenance du support d'enregistrement pendant un mode de reproduction en utilisant la lumière dudit premier niveau d'intensité de lumière.

7. Dispositif de commande d'intensité de lumière selon la revendication 5, dans lequel le dispositif est constitué pour former un espace ou une plage d'accueil sur une surface d'enregistrement du support d'enregistrement pendant un mode d'enregistrement en utilisant la lumière dudit premier niveau d'intensité de lumière.

8. Dispositif de commande d'intensité de lumière selon l'une quelconque des revendications 5 à 7, dans lequel le dispositif est constitué pour former un creux ou une partie amorphe sur une surfacé d'enregistrement du support d'enregistrement pendant un mode d'enregistrement en utilisant la lumière dudit deuxième niveau d'intensité de lumière.

9. Dispositif de commande d'intensité de lumière selon l'une quelconque des revendications précédentes, dans lequel une intensité de lumière de lecture est détectée et stockée pendant un mode de reproduction comme ledit premier niveau d'intensité de lumière pour un mode d'enregistrement.

**10.** Dispositif de commande d'intensité de lumière selon l'une quelconque des revendications précédentes, dans lequel ledit signal correspondant à l'intensité de lumière moyenne est détecté à l'aide d'un filtre passe-bas (7).

**11.** Dispositif de commande d'intensité de lumière selon l'une quelconque des revendications 1 à 9, dans lequel ledit signal correspondant à l'intensité de lumière moyenne est calculé à partir des niveaux d'intensité de lumière lorsqu'un facteur d'utilisation moyen d'une marque et d'espace est constant et un temps de modulation des niveaux d'intensité de lumière est connu.

**12.** Dispositif de commande d'intensité de lumière selon l'une quelconque des revendications 2 à 11, dans lequel ledit premier signal de référence est une valeur prédéterminée qui est sélectionnée lorsque le signal correspondant au deuxième niveau d'intensité de lumière (P2) est sélectionné par le premier dispositif de sélection.

**13.** Dispositif de commande d'intensité de lumière selon l'une quelconque des revendications 2 à 12, dans lequel ledit deuxième signal de référence est une valeur prédéterminée qui est sélectionnée lorsque le signal correspondant à l'intensité de lumière moyenne est sélectionné par le premier dispositif de sélection.

**14.** Dispositif de commande d'intensité de lumière selon les revendications 12 et 13, dans lequel ledit premier signal de référence est comparé avec le signal de sortie du premier dispositif de génération de signal (6), et ledit deuxième signal de référence est comparé avec la valeur moyenne.

**15.** Dispositif de commande d'intensité de lumière selon l'une quelconque des revendications précédentes, dans lequel le dispositif est constitué de sorte que ladite instruction de sélection (HS) commande le premier dispositif de sélection (8) et le deuxième dispositif de sélection (11) pour sélectionner le signal de sortie du premier dispositif de génération de signal (6) et le premier signal de référence, respectivement, lorsque la vitesse de modulation numérique est relativement basse.

**16.** Dispositif de commande d'intensité de lumière selon l'une quelconque des revendications 1 à 15, dans lequel le dispositif est constitué de sorte que ladite instruction de sélection (HS) commande le premier dispositif de sélection (8) et le deuxième dispositif de sélection (11) pour sélectionner le signal de sortie du deuxième dispositif de génération de signal et le deuxième signal référence, respectivement, lorsque la vitesse de modulation numérique est relativement élevée.

**17.** Système d'enregistrement d'informations configuré pour enregistrement des informations sur un support d'enregistrement, comprenant :

une source de lumière (3) destinée à irradier un faisceau de lumière en provenance de ladite source de lumière sur ledit support d'enregistrement, et
un dispositif de commande d'intensité de lumière destiné à commander l'intensité de lumière dudit faisceau de lumière,

dans lequel ledit dispositif de commande d'intensité de lumière est configuré selon l'une quelconque des revendications précédentes.

**18.** Ordinateur comprenant le système d'enregistrement d'informations selon la revendication 17.

**19.** Procédé de commande d'intensité de lumière, comprenant les étapes consistant à :

entraîner une source de lumière (3) de manière à générer une lumière d'un premier niveau d'intensité de lumière (P1) et au moins un deuxième niveau d'intensité de lumière (P2) supérieur au dit premier niveau d'intensité de lumière ;

**caractérisé par** l'étape consistant à générer un premier signal correspondant au deuxième niveau d'intensité de lumière, dans lequel ledit deuxième niveau d'intensité de lumière est détecté par une opération d'échantillonnage et un deuxième signal correspondant à une moyenne de l'intensité de la lumière générée provenant de la source de lumière selon une vitesse de modulation de lumière de la source de lumière ;
comparer un premier et un deuxième niveaux cibles avec les premier et deuxième signaux, respectivement ; et
ajuster une amplitude d'un courant d'entraînement pour entraîner la source de lumière (3) selon le résultat de comparaison.

**20.** Procédé selon la revendication 19, dans lequel ladite source de lumière (3), optionnellement, est entraînée pour générer une lumière d'un troisième niveau d'intensité de lumière supérieur aux dits premier et deuxième niveaux d'intensité de lumière.

**21.** Procédé selon la revendication 19 ou la revendication 20, dans lequel lesdits premier et deuxième niveaux cibles (Ref/H, Ref/L) sont sélectionnés selon la vitesse de modulation de lumière.

**22.** Produit de programme informatique comprenant des moyens de code de programme destiné à réaliser les étapes selon l'une quelconque des revendications 19 à 21, si ledit programme est exécuté sur des moyens de traitement de données d'un dispositif de commande de lumière ou d'un système d'enregistrement d'informations comprenant un dispositif de commande d'intensité de lumière selon l'une quelconque des revendications 1 à 16.

**23.** Produit de programme informatique comprenant des moyens de code de programme selon la revendication 22, qui sont enregistrés sur un support de données lisible par ordinateur ou dans un composant de stockage de données dont la mémoire est chargeable dans les moyens de traitement de données.

# FIG. 1

EP 1 213 713 B1

# FIG. 2

(A) WDATA

(B) WD1

(C) WD2

(D) POWER
P3
P2
P1
PAVE
P1

(E) P2SAMPLE

EP 1 213 713 B1

# FIG. 3

(A) WDATA

(B) WD1

(C) WD2

(D) POWER

P3

P2

P1

PAVE

(E) P2SAMPLE

EP 1 213 713 B1

# FIG. 4

EP 1 213 713 B1

# FIG. 5

| WD1 | WD2 | SW1 | SW2 | SW3 |
|-----|-----|-----|-----|-----|
| L | L | ON | OFF | OFF |
| H | L | OFF | OFF | ON |
| L | H | OFF | ON | OFF |
| H | H | – | – | – |

EP 1 213 713 B1

# FIG. 6